Europäisches Patentamt

European Patent Office

Office européen des brevets

(19)

(11) Numéro de publication: **0 298 821**
**A1**

(12)

# DEMANDE DE BREVET EUROPEEN

(21) Numéro de dépôt: 88401596.7

(22) Date de dépôt: 24.06.88

(51) Int. Cl.⁴: **F 16 K 17/30**
**F 16 K 37/00**

(30) Priorité: 30.06.87 FR 8709242

(43) Date de publication de la demande:
**11.01.89 Bulletin 89/02**

(84) Etats contractants désignés:
**AT BE CH DE ES FR GB GR IT LI LU NL SE**

(71) Demandeur: **L'AIR LIQUIDE, SOCIETE ANONYME POUR
L'ETUDE ET L'EXPLOITATION DES PROCEDES
GEORGES CLAUDE
75, Quai d'Orsay
F-75321 Paris Cédex 07 (FR)**

(84) Etats contractants désignés: **ES GR IT SE**

(71) Demandeur: **LA SOUDURE AUTOGENE FRANCAISE
75, Quai d'Orsay
F-75007 Paris (FR)**

(84) Etats contractants désignés:
**BE CH DE FR GB LI LU NL AT**

(72) Inventeur: **Arnout, Michel
15, rue de la Mare aux Fées
Citeepineguyon F-95130 Franconville (FR)**

**Lasnier, Didier
4, rue du Renard - Vaureal
F-95000 Cergy (FR)**

**Cannet, Gilles
9, rue Jean de La Fontaine
F-95620 Parnain (FR)**

(74) Mandataire: **Jacobson, Claude et al
L'AIR LIQUIDE, SOCIETE ANONYME POUR L'ETUDE ET
L'EXPLOITATION DES PROCEDES GEORGES CLAUDE
75, quai d'Orsay
F-75321 Paris Cédex 07 (FR)**

(54) **Disjoncteur pneumatique.**

(57) Un piston (4) coulissant librement dans le boîtier (1) du disjoncteur laisse normalement libre le passage du gaz à travers ce boîtier, mais interrompt ce passage dès que le débit de gaz devient supérieur à une valeur prédéterminée.

Le piston possède un prolongement (26) qui pénètre dans une fenêtre transparent (3) à section en U, en saillie sur le boîtier. Ce prolongement indique l'état du disjoncteur.

Application à la sécurité des installations de distribution de gaz, notamment de gaz combustibles.

FIG.1

EP 0 298 821 A1

**Description**

## "DISJONCTEUR PNEUMATIQUE"

La présente invention est relative à un disjoncteur pneumatique, du type comprenant: un boîtier dans lequel coulisse librement un piston et qui délimite une entrée et une sortie, le piston faisant communiquer l'entrée et la sortie dans une position de repos vers laquelle il est sollicité par un ressort et étant adapté pour prendre une position de déclenchement, dans laquelle cette communication est interrompue, lorsque le débit de gaz traversant le boîtier dépasse une valeur prédéterminée; un dispositif de réarmement; et un organe indicateur visible de l'extérieur du boîtier et possédant deux états représentatifs chacun d'une des deux positions du piston.

Un disjoncteur pneumatique est un dispositif de sécurité qui, placé en série sur un circuit de gaz, ferme ce circuit dès que le débit de gaz qui le traverse devient supérieur à une certaine valeur prédéterminée, et qui ne peut rétablir la circulation du gaz qu'après une intervention volontaire (réarmement).

Dans de nombreuses installations de distribution de gaz, par exemple dans les installations de soudage, coupage ou chauffe utilisant des gaz, on est amené, pour relier le poste de distribution de gaz à l'outil de travail, à utiliser des tuyaux souples.

Ces tuyaux sont souvent soumis à rude épreuve dans les milieux industriels (chaudronnerie, chantier...), et malgré l'existence de normes imposant l'utilisation de tuyaux ayant des niveaux de résistance mécanique élevés, il n'est pas toujours possible d'éviter les incidents tels que la rupture d'un tuyau (tôle qui tombe, sectionnement par engin motorisé,...) ou l'apparition d'une mauvaise liaison tuyau-raccord, entraînant un débit de fuite important (collier inefficace, tuyau mal monté, desserrage d'un raccord,...). Ces incidents peuvent entraîner à leur tour des risques d'accident et avoir de lourdes conséquences, en particulier dans le cas de l'utilisation de gaz combustibles.

Pour prévenir ces risques d'accident, il est connu de monter des dispositifs de sécurité, ou disjoncteurs pneumatiques, du type indiqué plus haut, qui coupent automatiquement le débit de gaz en cas de débit dépassant une certaine valeur.

De fait même du principe de fonctionnement de ces disjoncteurs, la sécurité peut être déclenchée par un appel de débit aval brusque (remplissage des tuyaux) provoqués par une ouverture rapide du gaz en amont du dispositif (détendeur ou bouteille). Les dispositifs du type précité permettent à l'opérateur de savoir, lorsque le gaz ne s'écoule pas, si c'est l'arrivée du gaz qui est fermée ou la sécurité qui a fonctionné.

Cependant, ces dispositifs, malgré leur grand intérêt, n'ont pas été adoptés par les utilisateurs, car leur structure est complexe et coûteuse, soit du fait que c'est le bouton de réarmement lui-même qui sert d'organe indicateur (EP - A - 39 643, EP - A - 90941), soit parce que cet organe est constitué par un ensemble de pièces supplémentaires (US - A - 3 968 813, DE - A - 34 24 749).

L'invention a pour but de fournir un dispositif particulièrement fiable et économique à réaliser. A cet effet, elle a pour objet un disjoncteur pneumatique du type précité, caractérisé en ce que l'organe indicateur est constitué par un prolongement du piston qui fait plus saillie hors du boîtier dans l'une des deux positions du piston que dans l'autre position de ce piston. Il peut notamment être prévu une fenêtre transparente à section en U en saillie sur le boîtier dans l'axe du piston, ledit prolongement pénétrant dans cette fenêtre dans l'une au moins des deux positions du piston.

Un exemple de réalisation de l'invention va maintenant être décrit en regard du dessin annexé, sur lequel :

    - la figure 1 est une vue en coupe longitudinale d'un disjoncteur pneumatique conforme à l'invention, en position normale de travail ; et

    - la figure 2 est une vue du même disjoncteur en position déclenchée, cette vue étant prise en coupe suivant la ligne II-II de la figure 1.

Le disjoncteur pneumatique représenté au dessin, réalisé pour l'essentiel en alliage léger dans cet exemple, est plus particulièrement destiné à équiper une installation de soudage, coupage ou chauffe et comprend un boîtier 1 dans lequel sont montés une douille 2, une fenêtre 3, un piston 4 et un dispositif de réarmement manuel 5.

Le boîtier 1 est traversé par un alésage d'axe X-X supposé vertical qui comporte trois parties : une partie supérieure 6 de grand diamètre à l'extrémité inférieure de laquelle débouche un conduit latéral taraudée 7 de sortie de gaz à axe horizontal, et qui est elle-même tarudée au-dessus de ce conduit ; une partie intermédiaire 8 de diamètre un peu plus petit, dans laquelle débouche un conduit latéral taraudé 9 d'entrée de gaz à axe horizontal ; et une partie inférieur 10 de courte longueur, de diamètre beaucoup plus petit, qui constitue en fait un orifice pratiqué dans une collerette 11 formée à l'extrémité inférieure de l'alésage du boîtier.

La douille 2 est elle aussi constituée de trois parties, à savoir, de haut en bas : une partie supérieure filetée 12 formant bouchon, vissée dans la partie supérieure de l'alésage du boîtier et s'appuyant sur la face supérieur de celui-ci par une collerette 13 ; une partie intermédiaire 14 qui est équipée d'un joint d'étanchéïté torique 15 et qui est enfilé sans jeu dans la partie intermédiaire 8 de l'alésage du boîtier ; et une partie inférieur tubulaire 16 terminée par une plaque horizontale 17. Une série d'ouvertures d'entrées 18 sont pratiquées dans cette partie 16, juste au-dessus de la plaque 17, et une série d'ouvertures de sortie 19 sont percées radialement dans la partie intermédiaire 14 de la douille en regard de la partie 6 de grand diamètre de l'alésage du boîtier .

La fenêtre 3 est constituée par une pièce transparente à section longitudinale en U, d'axe X-X, traversant l'orifice 10 du boîtier et se terminant par une collerette supérieure 20 qui est appliquée sur la collerette 11 du boîtier par la plaque inférieure 17 de la douille 2, avec interposition d'un joint d'étanchéïté annulaire 21 entre les deux collerettes.

Le piston 4 comporte une partie supérieure tubulaire 22, percée d'orifices 23, qui coulisse dans une alésage de la partie 14 de la douille, une partie intermédiaire cylindrique massive 24 de même diamètre équipée d'un joint d'étanchéïté torique 25 en saillie radiale, et une queue inférieure 26 séparée de la partie 24 par un collerette 27. La queue 26 traverse avec jeu un orifice de la plaque 17, formant guide et butée, pour pénétrer dans la fenêtre 3, la longueur de pénétration étant limitée par un épaulement 28 de la queue.

Le dispositif de réarmement 5 est constitué d'une tige-poussoir 29 coulissant à joint étanche dans un alésage du bouchon 12, et d'un bouton-poussoir 30 fixé sur l'extrémité supérieure de cette tige et repoussé vers le haut pr un ressort 31 qui prend appui sur la douille 12.

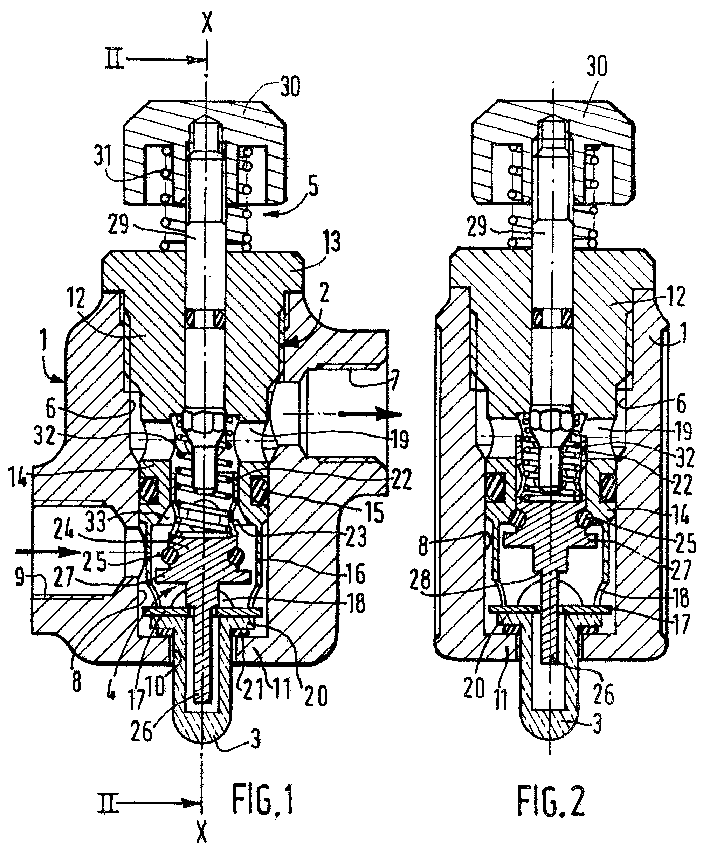

Le piston 4 est repoussé vers le bas par un ressort 32 enfilé dans sa partie supérieure et prenant appui sur la douille 2 autour de la tige 29. Ainsi, en l'absence de débit gazeux, le piston se trouve dans sa position normale inférieure de la figure 1, dans laquelle la collerette 27 se trouve juste au-dessus des ouvertures 18, et les ouvertures 23 se trouvent au-dessous d'un siège tronconique 33 ménagé dans la face inférieure de la partie 14 de la douille 2. Par conséquent, le joint 25 se trouve nettement écarté du siège 33. La queue 26 pénètre à peu près jusqu'au fond de la fenêtre 3 et est donc nettement visible de l'extérieur du boîtier. Cette visibilité est de préférence encore accentuée par une anodisation, par exemple en couleur verte, du piston 4.

Lorsqu'un débit de gaz est établi, ce gaz pénètre dans le boîtier par le conduit 9 puis dans la partie inférieure 16 de la douille par les ouvertures 18. Il passe ensuite dans l'étranglement délimité entre cette partie 16 et la collerette 27 du piston, en exerçant sur ce dernier une force ascendante qui augmente avec le débit. Tant que cette force reste inférieure à la poussée descendante exercée par le ressort 32, le piston ne bouge pas, et le gaz pénètre dans la partie supérieure 22 du piston par les ouvertures 23, en ressort par le haut et traverse radialement vers l'extérieur les ouvertures 19 de la douille 2 pour, finalement, sortir de l'appareil par le conduit 7.

Lorsque le débit de gaz atteint un seuil prédéterminé par la raideur du ressort 32, le piston est soulevé et son joint 25 vient s'appliquer sur le siège 33 de la douille, comme représenté à la figure 2. Le passage du gaz est alors interrompu, et la queue 26 du piston est rétractée dans le boîtier. L'opérateur est ainsi averti que la sécurité s'est déclenchée, et le passage du gaz ne peut être rétabli qu'en enfonçant le bouton-poussoir 30. En effet, ce geste fait descendre la tige 29 à l'encontre du ressort 31, et cette tige repousse le piston vers le bas pour le ramener dans sa position normale de la figure 1.

**Revendications**

1. Disjoncteur pneumatique, du type comprenant: un boîtier (1) dans lequel coulisse librement un piston (4) et qui délimite une entrée (9) et une sortie (7), le piston faisant communiquer l'entrée et la sortie dans une position de repos vers laquelle il est sollicité par un ressort (32) et étant adapté pour prendre une position de déclenchement, dans laquelle cette communication est interrompue, lorsque le débit de gaz traversant le boîtier dépasse une valeur prédéterminée; un dispositif (5) de réarmement; et un organe indicateur (26) visible de l'extérieur du boîtier et possédant deux états représentatifs chacun d'une des deux positions du piston (4), caractérisé en ce que l'organe indicateur (26) est constitué par un prolongement du piston (4) qui fait plus saillie hors du boîtier (1) dans l'une des deux positions du piston que dans l'autre position de ce piston.

2. Disjoncteur pneumatique suivant la revendication 1, caractérisé en ce qu'il comprend une fenêtre transparente (3) à section en U en saillie sur le boîtier (1) dans l'axe (X-X) du piston (4), ledit prolongement (26) pénétrant dans cette fenêtre dans l'une au moins des deux positions du piston.

3. Disjoncteur pneumatique suivant la revendication 2, caractérisé en ce que des moyens (17) de guidage dudit prolongement (26) sont prévus à l'entrée de la fenêtre (3).

4. Disjoncteur pneumatique suivant l'une quelconque des revendications 1 à 3, caractérisé en ce que ledit prolongement (26) est coloré.

5. Disjoncteur pneumatique suivant l'une quelconque des revendications 1 à 4, caractérisé en ce que l'axe (X-X) du piston (4) est perpendiculaire à la direction d'entrée du gaz dans le boîtier (1).

6. Disjoncteur pneumatique suivant l'une quelconque des revendications 1 à 5, caractérisé en ce que le dispositif de réarmement (5) comprend une tige-poussoir de réarmement (29) coaxiale au piston (4) et située à l'opposé dudit prolongement (26).

0298821

FIG.1

FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 039 643 (MESSIER-HISPANO-BUGATTI) * Revendications 1,17-18 * | 1 | F 16 K 17/30 F 1K 3 7/00 |
| Y | | 2 | |
| Y | EP-A-0 013 898 (H. SASSERATH & CO. KG) * Résumé * | 2 | |
| X | EP-A-0 090 941 (J. LORCH GES. & GmbH) * Résumé * | 1 | |
| X | DE-A-3 424 749 (GOK REGLER- UND ARMATUREN GmbH & CO. KG) * Résumé * | 1 | |
| A | US-A-3 968 813 (OLMSTED PRODUCTS CO.) | | |

DOMAINES TECHNIQUES
RECHERCHES (Int. Cl.4)

F 16 K 17/00
F 16 K 37/00

Le présent rapport a été établi pour toutes les revendications

| Lieu de la recherche | Date d'achèvement de la recherche | Examinateur |
|---|---|---|
| LA HAYE | 05-10-1988 | DE SMET F.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)